# EUROPÄISCHE PATENTSCHRIFT

(11) **EP 3 571 113 B1**
(45) Veröffentlichungstag und Bekanntmachung des Hinweises auf die Patenterteilung: **17.11.2021**
(21) Anmeldenummer: 18704412.8
(22) Anmeldetag: 18.01.2018
(51) Int. Cl.: E02F 9/08, E02F 9/20, B62D 49/08, E02F 9/18, B62D 61/06

(54) **ARBEITSMASCHINE**
WORK MACHINE
ENGIN DE TRAVAIL

(30) Priorität: 19.01.2017 DE 102017100963
(43) Veröffentlichungstag der Anmeldung: 27.11.2019
(73) Patentinhaber: Heinzler, Jonas, 88605 Sauldorf (DE)
(72) Erfinder: SANTO, Wilfried, 79541 Lörrach-Hauingen (DE)
(74) Vertreter: Patentanwälte und Rechtsanwalt Weiß, Arat & Partner mbB
(86) Internationale Anmeldenummer: PCT/EP2018/051143
(87) Internationale Veröffentlichungsnummer: WO 2018/134276

(56) Entgegenhaltungen:
- US-A- 2 766 850
- US-A- 3 021 625
- US-A1- 2009 206 589

## Beschreibung

### Technisches Gebiet

Die Erfindung betrifft eine Arbeitsmaschine nach dem Oberbegriff des Anspruchs 1.

### Stand der Technik

Aus dem Stand der Technik wird zunächst auf die US 2,766,850 verwiesen, welche eine Arbeitsmaschine in Form eines Gabelstaplers zeigt, bei der ein Gewicht als Gegenlager abgesetzt wird, um den Gabelstapler bei schweren zu hebenden Gegenständen zu stabilisieren. Dieses Dokument offenbart eine Arbeitsmaschine gemäß dem Oberbegriff des Patentanspruchs 1.

Die US 3,021,625 beschreibt eine handgeführten Schubkarren mit einer einzigen Achse, wobei motorisch die Ladeschaufel angetrieben wird.

Weiter wird auf die US 2009/0206589 A1 hingewiesen, bei der ein doppelachsiger Schaufellader gezeigt ist, wobei einends die Schaufel und andernends Zusatzgewichte vorhanden sind und je nach Last auf die Schaufel die Gewichte von der Schaufel weg verschoben werden, um einen Ausgleich-Gegengewicht zu schaffen, wobei sich auch die Achsen des Schaufelladers voneinander entfernen.

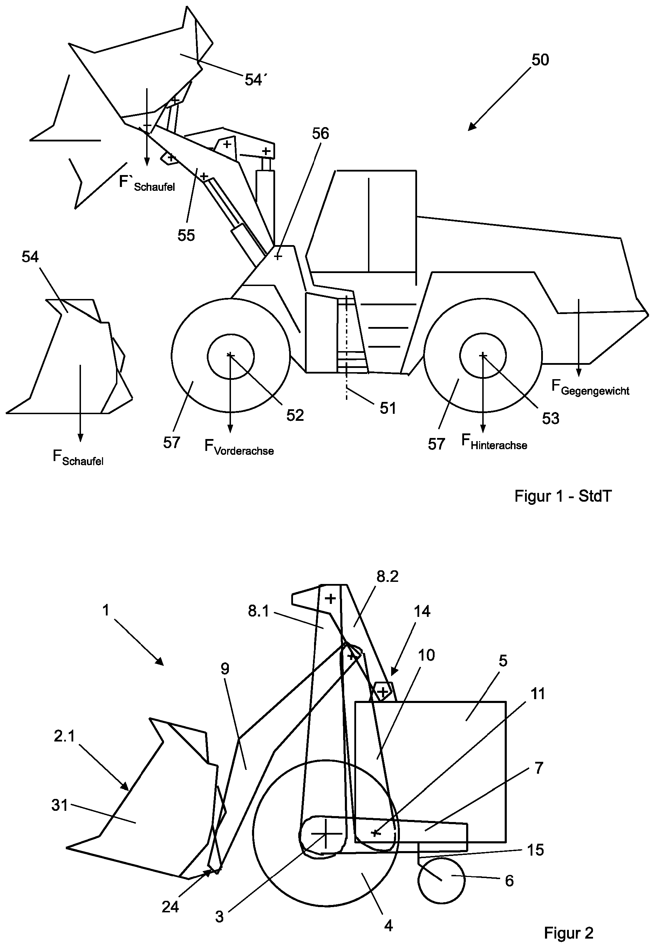

Aus dem Stand der Technik sind ausserdem weitere verschiedene Arbeitsmaschinen, wie bspw. Radlader bekannt, die zwei Achsen aufweisen. Je nach Lage des Schwerpunktes verteilt sich die Last bei solchen Arbeitsmaschinen in einem bestimmten Verhältnis auf die beiden Achsen. Zur Lenkung des Fahrzeugs werden in den meisten Fällen entweder die Räder an einer oder an beiden Achsen eingeschwenkt oder der Rahmen besitzt ein Knickgelenk (siehe Figur 1), die welchem die Räder starr an den Achsen befestigt sind und die Lenkung über das Einknicken des Fahrzeugrahmens stattfindet.

Eine weitere Ausführung stellen sogenannte Skid-Steers dar, bei denen alle vier Räder angetrieben werden, wobei die Antriebe der Räder einer Fahrzeugseite starr miteinander gekoppelt sind und jede Fahrzeugseite einen eigenen Antrieb aufweist. Dadurch kann eine Lenkbewegung ähnlich wie bei Kettenfahrzeugen erzeugt werden, indem die beiden Seiten mit unterschiedlicher Drehzahl angetrieben werden. Nachteilig bei den Skid-steer-Lenkungen ist aber, dass die Räder seitlich verschoben werden müssen und somit nicht nur ihrer eigenen Abrollrichtung folgen. Dadurch wird Antriebsenergie verbraucht und ein überhöhter Reifenverschleiß erzeugt, weshalb solche Lenkungen nur für relativ kleine Lader verwendet werden können.

Bei den zuvor genannten Arbeitsmaschinen/Fahrzeugen mit zumindest zwei Achsen, verteilt sich die Last auf die Achsen je nach Lage des Fahrzeugschwerpunktes in Bezug zum Abstand des Fahrzeugschwerpunktes zu den Rädern. Daher sind die Achsen und Räder der Arbeitsmaschinen in der Regel so dimensioniert, dass sie auch höhere Lasten aufnehmen können. Weiterhin sind die Achsen und die Räder dieser Arbeitsmaschinen so dimensioniert, dass alle im normalen Betrieb vorkommenden Verschiebungen des Fahrzeugschwerpunkts, bspw. durch eine Lastaufnahme in einer Schaufel eines Radladers, und alle auftretenden dynamischen Kräfte, bspw. hervorgerufen durch einen Bremsvorgang, durch die Verlagerung der Radlastverteilung aufgefangen werden können, ohne dass das stabile Gleichgewicht verloren geht. Bei einem Radlader wird beispielsweise durch die beladene Schaufel eine Zusatzkraft erzeugt, die weit außerhalb einer Kippachse der Vorderachse liegt. Außerdem muss der Lader beim Befüllen der Schaufel sogenannte Losbrechkräfte aufbringen können, um das zu ladende Material vom Haufen oder der Wand abzulösen.

Um in solchen Lastsituationen eine stabile Fahrzeuglage zu gewährleisten wird in den Arbeitsmaschinen ein Gegengewicht am entgegengesetzten Ende des Fahrzeuges zu dem Ende mit dem angebrachten Arbeitsgerät angebracht oder das Fahrzeug umfasst im Bereich des zum Arbeitsgerät entgegengesetzten Ende ein Gegengewicht auf. Bei einem Radlader ist das Gegengewicht bspw. mit möglichst großem Abstand zur Vorderachse, im Regelfall in einem Bereich hinter einer Hinterachse des Radladers, im Bereich eines Fahrzeugendes des Radladers angebracht.

Daraus resultiert der Nachteil, dass sowohl Achsen, Räder als auch die Hydraulik oder Motoren zum Ansteuern der Arbeitsgeräte für eine ausreichende Standfestigkeit und Nutzbarkeit der Arbeitsmaschinen sehr gross bzw. leistungsstrak dimensioniert werden müssen. Dabei müssen die Achsen bspw. bei einem Radlader so dimensioniert werden, dass einerseits die Hinterachse im leeren Zustand der Schaufel das Gewicht des Gegengewichts aufnehmen kann und andererseits die Vorderachse das auf ihr lastende Gewicht aufnehmen kann, welches bspw. bei einem Herausbrechen von festen Material aus einer Wand, etwa in einem Steinbruch, entstehen kann. Dabei muss zudem auf Sicherheiten gegen ein Kippen der Arbeitsmaschine für den Fahrbetrieb geachtet werden, sodass im Gesamten die Achsen, die Räder und die Motoren oder Hydraulik zur Ansteuerung der Arbeitsgeräte in der Regel so gross dimensioniert werden müssen, dass die Arbeitsmaschinen nur sehr schlechte Last-Leergewichtverhältnisse aufweisen. Dies führt unter anderem zu einem sehr hohen Verbrauch an Primärenergieträgern durch diese Arbeitsmaschinen.

Weiterhin sind aus dem Stand der Technik auch verschiedene Einachsfahrzeuge bekannt. So sind bspw. selbstbalancierende einachsige Elektroroller (sogenannte Segways) bekannt, die im Wesentlichen ein inverses Pendel darstellen, bei denen eine Ausbalancierung nicht durch den Fahrer sondern durch eine elektronische Regelung erfolgt, die versucht, den Schwerpunkt stets über der Achse zu halten. Nachteilig an dieser Regelung ist, dass folglich keine Anbaugeräte oder Ladung an einen solchen einachsigen Elektroroller angebracht werden kann, da durch diese der Schwerpunkt stark verschoben würde und die zugrundeliegende Regelung zur Ausbalancierung daraufhin die Verschiebung des Schwerpunktes zur Steuerung der Beschleunigung nutzen würde. Zwar ist aus der DE 20 208 006 289 U1 ein Adaptersystem bekannt, um einen Lastenwagen an einem selbstbalancierenden einachsige Elektroroller anzubringen, jedoch erfolgt durch bzw. über das Adaptersystem eine Entkoppelung von der Regelung zur Selbstbalancierung.

Folglich ist ein solcher einachsiger Elektroroller nicht für die Verwendung als Arbeitsmaschine bzw. als Trägerfahrzeug von Arbeitsgeräten, wie beispielsweise einer Radladerschaufel oder einem Pflug nutzbar, da diese Anbaugeräte stets zu einer Verschiebung des Schwerpunkts und einer daraus folgenden Störung des Gleichgewichtszustands führen würden.

Weiterhin sind aus der Landwirtschaft Einachsgeräteträger zur Aufnahme von verschiedenen Arbeitsgeräten bekannt, die nicht selbstbalancierend sind. Bei solchen Einachsgeräteträgern, die bspw. in Gebirgsgegenden zur Bewirtschaftung von Steilhanglagen genutzt werden, dient das Arbeitsgerät als weiterer Auflagepunkt, der der Arbeitsmaschine die notwendige Stabilität gibt.

### Aufgabe der Erfindung

Die Aufgabe der vorliegenden Erfindung ist es, die Nachteile aus dem Stand der Technik zu überwinden. Insbesondere ist es Aufgabe der Erfindung eine Arbeitsmaschine/ein Fahrzeug bereit zu stellen, welches für die Bearbeitung der heute üblichen Arbeitsaufgaben von Arbeitsmaschinen geeignet ist und dabei eine hohe Wendigkeit und Flexibilität aufweist. Weiterhin ist es Aufgabe der Erfindung eine Arbeitsmaschine/ ein Fahrzeug zur Verfügung zu stellen, dass ein geringeres Gewicht bei einer gleichbleibenden Leistungsfähigkeit sowie eine höhere Agilität und eine geringere Teiledichte aufweist. Weiterhin ist es Aufgabe der Erfindung eine Arbeitsmaschine/ ein Fahrzeug bereit zu stellen, welches als Basisträgerfahrzeug für verschiedene Arbeitsgeräte nutzbar sein soll. Zudem soll es Aufgabe der Erfindung sein eine Arbeitsmaschine/ein Fahrzeug zur Verfügung zu stellen, mit dem eine Steigerung der Produktivität ermöglicht werden soll und das zudem modernen ökologischen Anforderungen entspricht.

### Lösung der Aufgabe

Zur Lösung der Aufgabe führen die Merkmale nach dem Anspruch 1. Vorteilhafte Ausgestaltungen sind in den Unteransprüchen beschrieben.

Eine erfindungsgemässe Arbeitsmaschine umfasst ein Arbeitsgerät oder eine Aufnahme für ein Arbeitsgerät. Weiterhin umfasst die erfindungsgemässe Arbeitsmaschine genau eine Hauptfahrzeugachse, wobei beidseitig an der Hauptfahrzeugachse Radelemente angeordnet sind. Den beidseitig an der Hauptfahrzeugachse angeordneten Radelementen ist jeweils eine separate Antriebseinheit zugeordnet. Weiterhin umfasst die erfindungsgemässe Arbeitsmaschine zumindest eine Steuerung, die zumindest einen Regelkreis umfasst. Der Regelkreis der Steuerung wird dazu genutzt, dass sich die Arbeitsmaschine selbstbalancierend um die Hauptfahrzeugachse ausrichten kann. Weiterhin umfasst die erfindungsgemässe Arbeitsmaschine ein Gegengewicht, um ein Gewicht des Arbeitsgerätes oder des an der Aufnahme angebrachten Arbeitsgerätes auszugleichen. Die Position des Gegengewichts ist gegenüber der Hauptfahrzeugachse über die Steuerung regelbar, so dass über eine Positionsverschiebung des Gegengewichts gegenüber der Hauptfahrzeugachse die Arbeitsmaschine um die Hauptfahrzeugachse ausbalanciert werden kann. Weiterhin kann durch eine Positionsverschiebung des Gegengewichts gegenüber der Hauptfahrzeugachse, die zu einer Verschiebung des Fahrzeugschwerpunkts führt, die Arbeitsmaschine in ihren Bewegungsrichtungen gesteuert werden.

Eine erfindungsgemässe Arbeitsmaschine weist somit im Gegensatz zu einer Arbeitsmaschine aus dem Stand der Technik nur eine Hauptfahrzeugachse auf, welche im Betrieb immer die Hauptlast trägt. Daraus ergibt sich der Vorteil, dass auf eine gelenkte Achse oder eine Knicklenkung, wie sie im Stand der Technik genutzt werden, verzichtet werden kann, da die Lenkung über eine Ansteuerung der Antriebe der jeweiligen Radelemente, die beidseitig an der Hauptachse angeordnet sind, erfolgt.

Die Lenkung erfolgt dabei wie bei einem selbst balancierenden elektronischen Roller, der aus dem Stand der Technik bekannt ist, in den die Radelemente über ihre zugeordneten Antriebe mit einer unterschiedlichen Antriebsdrehzahl und -richtung angesteuert werden können. Dadurch ergibt sich der Vorteil, dass die erfindungsgemässe Arbeitsmaschine, im Gegensatz zu Arbeitsmaschinen aus dem Stand der Technik, eine sehr hohe Agilität und Wendigkeit aufweisen, da durch einen Antrieb der Radelemente in entgegengesetzte Drehrichtungen sogar ein Wenden auf der Stelle ermöglichst wird.

Um eine Last, die durch das Arbeitsgerät ausserhalb des Bereichs der Hauptachse dynamisch aufgebracht wird, auszugleichen und den Gesamtschwerpunkt der Fahrzeugs oberhalb der Hauptfahrzeugachse zu halten, wird dabei über die Steuerung mit dem Regelkreis das Gegengewicht so in der Längsrichtung verschoben, dass sich der Schwerpunkt über der Hauptachse befindet und die Arbeitsmaschine dadurch ausbalanciert ist. In dem das Gegengewicht in eine Richtung in die die Arbeitsmaschine bewegt werden soll verschoben wird, kann die Arbeitsmaschine nach demselben System wie bei einem selbstbalancierenden elektronischen Roller in diese Richtung bewegt werden. Hierbei erzeugt die Steuerung an den Antrieben der Radelemente ein Drehmoment, um der Schwerpunktverschiebung entgegen zu wirken, wodurch sich das Fahrzeug in die Richtung zu der Schwerpunktverschiebung bewegt. Um das Fahrzeug wieder abzubremsen wird das Gegengewicht entgegen der Fahrtrichtung bewegt, bis die Arbeitsmaschine zum stehen kommt.

In einem Ausführungsbeispiel kann das Gegengewicht weiterhin in einer Richtung der Hauptfahrzeugachse verschoben werden, um durch die seitliche Verschiebung das Fahrzeug während einer Kurvenfahrt um die Längsachse der Arbeitsmaschine zu stabilisieren.

Die Hauptfahrzeugachse mit den Radelementen und den zugehörigen Antriebseinheiten ist in einem typischen Ausführungsbeispiel an einem Basiselement angeordnet, das Neigungssensoren, insbesondere digitale Halbleitergyroskope umfasst. Die Neigungssensoren sind dabei dem Regelkreis der Steuerung der Arbeitsmaschine zugeordnet, bei dem es sich vorzugsweise um einen elektronischen Regelkreis handelt, der neben den Neigungssensoren weiterhin auch Lastsensoren umfassen kann. Weiterhin kann die Steuerung auch Beschleunigungssensoren umfassen, so dass neben der Daten der Neigungssensoren, die weiteren Daten der Beschleunigungssensoren zur Ausbalancierung der Arbeitsmaschine genutzt werden können.

In einem Ausführungsbeispiel kann an der erfindungsgemässen Arbeitsmaschine weiterhin in und/oder an dem Gegengewicht ein Hilfsrad angeordnet sein. Der Vorteil eines solchen Hilfsrads ist, dass dadurch beispielsweise Lastspitzen abgefangen werden können. Solche Lastspitzen können beispielsweise entstehen, wenn die Arbeitsmaschine als Arbeitsgerät eine Schaufel zum Abbrechen von Material, beispielsweise in einer Steinbruchwand, genutzt wird oder bei einem Entladen der Schaufel, wenn die Last an der Schaufel durch das Herausfallen von Ladegut schlagartig geringer wird. Hierfür kann das Hilfsrad in einem Ausführungsbeispiel als zusätzlicher Abstützelement genutzt werden, indem durch die Steuerung zugelassen wird, dass auf dem Hilfsrad ebenfalls eine geringe Last lasten darf, sodass der Schwerpunkt kurzzeitig (insbesondere bei einem Beladevorgang) kurzfristig ausserhalb der Hauptfahrzeugachse zu dem Gegengewicht hin verschoben liegen darf. Zudem kann durch das Hilfsrad verhindert werden, dass das Gegengewicht durch die schlagartige Verschiebung des Schwerpunkts (beispielsweise beim Entladen der Schaufel) der Arbeitsmaschine auf den Boden aufschlägt oder bei einer solchen schlagartig erforderlichen Positionsverschiebung, auf dem Boden schleift.. Somit ist ein Vorteil des Hilfsrades, dass dieses insbesondere beim Beladen und Entladen, bei dem es zum schlagartigen Lastspitzen und daraus resultierenden Schwerpunktverschiebungen kommen kann, als zusätzlicher Abstützpunkt für die Arbeitsmaschine genutzt werden kann. Dabei ist jedoch zu beachten, dass die Hauptlast stets von der Hauptfahrzeugachse getragen werden soll, so dass das Hilfsrad und dessen Lagerung/Aufhängung in und/oder an dem Gegengewicht lediglich für geringe Lasten dimensioniert werden muss.

Weiterhin kann das Hilfsrad beispielsweise ein Aufsetzen des Gewichts auf den Boden bei einer Notbremsung der Arbeitsmaschine verhindern, bei der das Gegengewicht der Arbeitsmaschine schlagartig entgegen einer Fahrtrichtung der Arbeitsmaschine bewegt werden muss

Erfindungsgemäß umfasst das Gegengewicht einen Energiespeicher und/oder einen Motor zur Energieumwandlung. Bei einem Motor zur Energieumwandlung kann es sich beispielsweise um einen Verbrennungsmotor, wie er aus dem Stand der Technik bekannt ist, handeln. Weiterhin sind dadurch auch weitere bekannte Vorrichtungen zur Energieumwandlung, wie beispielsweise Hydraulikpumpen mitumfasst. Bei dem Energiespeicher kann es sich beispielsweise um Akkumulatoren zur Speicherung elektrischer Energie handeln. Mit der durch den Energiespeicher und/oder den Motor zur Energieumwandlung bereitgestellten Energie können neben den Antriebseinheiten der Radelemente weiterhin auch Hydraulikmotoren und/oder Pumpen zur Steuerung der Verschiebung des Gegengewichts und/oder des Arbeitsgeräts genutzt werden.

In einem typischen Ausführungsbeispiel handelt es sich bei den Antriebseinheiten der Radelemente an der Hauptfahrzeugachse um Elektromotoren, die eine elektrische Energie, die durch den Energiespeicher und/oder den Motor zur Energieumwandlung bereitgestellt wird, in kinetische Energie umwandeln. Weiterhin kann es sich bei den Antriebseinheiten um Hydraulikmotoren handeln.

Zudem können die Radelemente der Arbeitsmaschine in einem Ausführungsbeispiel Bremseneinheiten umfassen. Dadurch ergibt sich der Vorteil, dass beispielsweise bei einem Be-/Entladen des Arbeitsgeräts der Arbeitsmaschine die Hauptfahrzeugachse ortsfest gehalten werden kann. Die notwendige Kraft, um beispielsweise Schüttgut in einer Schaufel aufzunehmen oder in einem Steinbruch Material von einer Wand abzubrechen, erfolgt in einem solchen Ausführungsbeispiel lediglich durch eine Bewegung des Arbeitsgeräts und nicht, wie beispielsweise bei Radladern aus dem Stand der Technik durch eine Bewegung der gesamten Arbeitsmaschine. Während eines solchen Be- oder Entladevorgangs, bei dem die Hauptfahrzeugachse durch die Bremseneinheiten der Radelement ortsfest gehalten wird, erfolgt die Selbstbalancierung der Arbeitsmaschine nur über ein Verfahren/ eine Positionsverschiebung des Gegengewichts.

Das Gegengewicht der Arbeitsmaschine ist in einem typischen Ausführungsbeispiel über zumindest zwei Hebelelemente mit dem Basiselement verbunden. Die zumindest zwei Hebelelemente bilden dabei einen zweiteiligen Arm aus, der ein Verschieben des Gegengewichts entlang der Längsachse der Arbeitsmaschine ermöglicht. Um das Gegengewicht in einer im wesentlichen horizontalen Lage zu halten, stehen die Hebelelemente und das Gegengewicht mit einer Hydrauliksteuerung in Wirkverbindung. Die Hydrauliksteuerung kann dabei verschiedene Element, wie Hydraulikzylinder umfassen, die bei einem Verschieben des Gegengewichts eine Position des Gegengewichts gegenüber den Hebelelementen so ausrichtet, dass sich das Gegengewicht in einer im wesentlichen horizontalen Lage befindet, so dass im Gegengewicht untergebrachte Elemente der Arbeitsmaschine, wie beispielsweise der Motor zur Energieumwandlung, Hydraulikpumpen und/oder weitere Speicher-, Antriebs- oder Steuerungselemente störungsfrei arbeiten können und deren Funktion nicht durch eine etwaige Schrägstellung beeinträchtigt werden kann.

In einem weiteren Ausführungsbeispiel stehen die Hebelelemente mit weiteren Hilfshebelelementen in Wirkverbindung, so dass die Hebelelemente und die Hilfshebelelemente eine Parallelogrammführung erzeugen. Dadurch kann ebenfalls erreicht werden, dass sich die horizontale Lage des Gegengewichts bei einem Verschieben entlang der Längsachse nicht verändert. Vorzugsweise hält die Steuerung über die Neigungssensoren (Halbleitergyroskope) das Basiselement der Arbeitsmaschine ebenfalls in einer im wesentlichen horizontalen Lage, da durch die Parallelogrammführung die Lage des Gegengewichts im wesentlichen der Lage des Basiselements, an dem die Hebelelemente und die Hilfshebelelemente angeordnet sind, entspricht.

In weiteren Ausführungsbeispielen kann anstelle der Hebelelemente das Gegengewicht über ein Scherenelement mit dem Basiselement verbunden sein, wobei die Scherenelemente an dem Basiselement sowie an dem Gegengewicht verschiebbar gelagert sind, so dass eine Verschiebung von Enden der Scherenelemente an dem Basiselement zueinander hin oder voneinander weg zu einem Verschieben des Gegengewichts entlang der Längsachse der Arbeitsmaschine von der Hauptfahrzeugachse weg oder hin zu dieser erfolgt. Eine weitere Möglichkeit das Gegengewicht verschiebbar mit dem Basiselement zu verbinden ist, das Basiselement auf einem Linearlager anzuordnen, welches an dem Basiselement angeordnet ist. Bei einem solchen Linearlager kann es sich beispielsweise um Führungsschienen handeln, auf denen das Gegengewicht verschiebbar/verfahrbar gelagert ist. In einem weiteren Ausführungsbeispiel ist zudem möglich, dass ein starres längliches Gegengewicht genutzt wird und die Hauptfahrzeugachse an dem starren Gegengewicht entlang des Gegengewichts verschiebbar angeordnet ist.

In einem typischen Ausführungsbeispiel umfasst die Arbeitsmaschine weiterhin ein Steuerelement, so dass die Arbeitsmaschine eine autonome Steuerbarkeit oder eine Fernsteuerbarkeit aufweist. Auch besteht die Möglichkeit, dass die Arbeitsmaschine eine Fahrkabine für einen Maschinenbediener aufweist. Vorzugsweise jedoch wird die Arbeitsmaschine ferngesteuert oder ist über die autonome Steuerung selbstfahrend. Ein Vorteil einer autonomen Steuerung bzw. einer Fernsteuerung der Arbeitsmaschine liegt darin, dass das Fahrzeug schneller und agiler betrieben werden kann, da etwaige Vibrationen und Schläge, die insbesondere im Gelände, wie einem Steinbruch, auftreten können, nicht an einen Maschinenbediener, der in einem Führerhaus sitzt weitergegeben werden. Um ein autonomes Selbstfahren oder auch eine Fernsteuerbarkeit von einem Punkt zu ermöglichen, von dem die Arbeitsmaschine nicht eingesehen werden kann, umfasst das Steuerelement der Arbeitsmaschine vorzugsweise Kameras und/oder Sensorelemente. Hierbei können verschiedene Kameras und Sensorelemente, wie sie aus dem Bereich der Steuerungstechnik und des autonomen Fahrens bekannt sind, genutzt werden. Nur beispielhaft sollen hier Bildkameras, Infrarotkameras, Radarsensoren und Lasersensoren genannt werden.

Die Arbeitsmaschine umfasst in einem typischen Ausführungsbeispiel ein Arbeitsgerät oder eine Aufnahme für ein Arbeitsgerät. Bei der Aufnahme für ein Arbeitsgerät kann es sich um verschiedene Aufnahmen handeln. Beispielsweise kann es sich hierbei um Anhängezugvorrichtungen oder Dreipunktaufnahmen, wie sie aus dem Bereich der landwirtschaftlichen Nutzmaschinen bekannt sind, handeln. Auch andere Aufnahmen, die z.B. die Aufnahme von mehrteiligen Arbeitselementen, wie sie beispielsweise bei Teleskopbühnen oder Baggern zum Einsatz kommen, sind möglich.

In einem weiteren Ausführungsbeispiel umfasst die Arbeitsmaschine ein Arbeitsgerät, welches vorzugsweise über einen Arbeitsarm und einen Schwenkarm mit dem Basiselement verbunden ist. Durch die zweiteilige Ausführung der Verbindung zwischen Arbeitsgerät und Basiselement kann beispielsweise erreicht werden, dass die Räder während eines Be- oder Entladevorgangs stillstehen können, folglich ortsfest gehalten werden. Die nötigen Kräfte, die an dem Arbeitsgerät aufgebracht werden müssen, werden in einem solchen Fall ausschliesslich über Antriebselemente erzeugt, die mit dem Arbeitsgerät, dem Arbeitsarm, dem Schwenkhebel und dem Basiselement in Wirkverbindung stehen. Bei solchen Antriebselementen kann es sich beispielhaft um Elektromotoren handeln, die den Drehachsen zwischen den einzelnen Elementen zugeordnet sind oder um Hydraulikelemente, wie Hydraulikzylinder, die eine Verdrehung der Elemente zueinander erzeugen.

In einem bevorzugten Ausführungsbeispiel ist der Schwenkarm an dem Basiselement in Bezug auf das Arbeitsgerät hinter der Hauptfahrzeugachse gelagert. Die Lagerung hinter der Hauptfahrzeugachse erzeugt den Vorteil, dass das Arbeitsgerät über den Schwenkarm und den Arbeitsarm sehr weit nach hinten gezogen werden kann, wodurch die Ladung sehr nahe an die Hauptfahrzeugachse geführt werden kann. Dadurch kann auch das Gegengewicht nahe an die Hauptfahrzeugachse verschoben werden, so dass die beladene Arbeitsmaschine in einer Transportstellung im Verhältnis zu Fahrzeugen aus dem Stand der Technik eine geringe Grösse aufweist. Zudem wird hierdurch eine agile Drehung um die eigene Hochachse ohne die Erzeugung von grossen und störenden Kräften ermöglicht. Ein weitere Vorteil der zweiteiligen Ausführung aus Schwenkarm und Arbeitsarm liegt darin, dass dadurch die Antriebseinheiten der Radelemente kleiner ausgeführt werden können, da die Kraft zur Aufnahme einer Ladung durch die Antriebselemente, die dem Arbeitsgerät, dem Arbeitsarm, dem Schwenkhebel und dem Basiselement zugeordnet sind und/oder mit diesem in Wirkverbindung stehen,, aufgebracht werden.

Ein weiterer Vorteil in dieser Anordnung besteht darin, dass dadurch ein sogenanntes Impulsladeverfahren ermöglicht wird. Während bei Arbeitsmaschinen aus dem Stand der Technik die notwendige Kraft durch eine stetige Kraft, die beispielsweise bei einem Radlader durch ein Fahren in Richtung des aufzuladenden Schüttguts, erreicht wird, wird bei einem Impulsladeverfahren die Arbeitsmaschine durch die Bremseneinheiten der Radelemente ortsfest gehalten und es wird lediglich durch ein schnelles hin- und her bewegen des Arbeitsgeräts eine Impulskraft erzeugt.

Vorzugsweise umfasst die Arbeitsmaschine weiterhin einen hydraulischen Speicher, der sowohl für das schnelle Aufbringen von hohen Hydraulikdrücken bei dem Impulsladeverfahren genutzt werden kann, als auch zum Abfangen von Lastspitzen, die ein sehr schnelles Aus- oder Einfahren des Gegengewichts und hierfür eine sehr schnelle Bereitstellung oder Abnahme von Hydraulikdruck an den Hydraulikelementen erfordern. Auch bei Notbremsungen kann der hydraulische Speicher genutzt werden, um ein schnelles Aus- oder Einfahren des Gegengewichts zu ermöglichen. Durch einen solchen, ausreichend gross dimensionierten, hydraulischen Speicher können die hydraulischen Pumpen zur Erzeugung des Hydraulikdrucks kleiner dimensioniert werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Arbeitsmaschine in Form eines Radladers aus dem Stand der Technik;
- Figur 2: eine schematische Darstellung eines Ausführungsbeispiels einer erfindungsgemässen Arbeitsmaschine mit einer Schaufel als Arbeitsgerät;
- Figur 3: eine schematische Darstellung eines Ausführungsbeispiels einer weiteren erfindungsgemässen Arbeitsmaschine mit einer Schaufel, die beladen ist, als Arbeitsgerät;
- Figuren 4a bis 4j: eine schematische Darstellung eines Beladevorgangs einer Schaufel der Arbeitsmaschine nach Figur 2;
- Figur 5a bis 5f: eine schematische Darstellung eines Entladevorgangs einer Schaufel der Arbeitsmaschine nach Figur 2; und
- Figur 6: eine schematische Darstellung eines weiteren Ausführungsbeispiels einer erfindungsgemässen Arbeitsmaschine.

### Ausführungsbeispiel

In Figur 1 ist ein Radlader 50, der einer Arbeitsmaschine/einem Fahrzeug aus dem Stand der Technik entspricht, dargestellt. Bei dem Radlader 50 sind Räder 57 starr an einer Vorderachse 52 und einer Hinterachse 53 befestigt. Um das Fahrzeug zu lenken, weist der Rahmen ein Knickgelenk auf, welches um eine Knickachse 51 eingeknickt werden kann. Somit findet eine Lenkung des Radladers 50 über ein Einknicken des Fahrzeugrahmens des Radladers 50 statt. Der Radlader 50 der Figur 1 weist weiterhin als Arbeitsgerät eine Schaufel 54 auf, welche über einen Arbeitsarm 55 mit dem Fahrzeugrahmen verbunden ist. Der Arbeitsarm 55 ist dabei drehbar um die Drehachse 56 gelagert. Die Schaufel 54 ist in der Figur 1 sowohl in einer Position, in der sie auf dem Boden liegen würde, dargestellt (Bezugszeichen 54) als auch in Positionen, die beispielweise bei einem Entladen von Ladung aus der Schaufel in ein Transportfahrzeug, auftreten können (Bezugszeigen 54').

Um ein Kippen des Radladers bei beladener Schaufel 54, 54' zu verhindern, weisen Radlader 50 aus dem Stand der Technik im Heckbereich ein Gegengewicht auf. Dies ist in Figur 1 durch F_{Gegengewicht} dargestellt. Das Gegengewicht bzw. die daraus resultierende Kraft F_{Gegengewicht}, ist in der Regel so ausgelegt, dass ein Kippen über die Vorderachse 52 mit einer Sicherheit von einem Faktor 2,0 verhindert wird. Zur Bestimmung dieser Kipplast, bei deren erreichen an der Hinterachse 53 keine Last mehr wirkt, wird angenommen, dass sich der Radlader 50 in einer statisch ungünstigsten Position befindet, d.h., dass eine Gewichtskraft F_{Schaufel} den grössten Abstand zur Vorderachse 52 aufweist, die beim Radlader 50 einer Kippachse entspricht, und der Radlader 50 eine voll eingeknickte Position des Knickgelenks aufweist. Unter Berücksichtigung des Sicherheitsfaktors von 2,0 ergibt sich dann daraus eine Nennlast, die in der Schaufel 54 des Radladers 50 aufgenommen werden kann, die 50% der Kipplast entspricht. Um ein Kippen zu verhindern, müssen solche Arbeitsmaschinen aus dem Stand der Technik daher sehr schwer und aufgrund von verschiedenen möglichen Arbeitszuständen, die auftreten können, sehr gross dimensioniert ausgeführt werden.

Beispielsweise muss bei einem Radlader 50, der 10t Nutzlast in der Schaufel 54 aufnehmen können soll, die Hinterachse so dimensioniert werden, dass diese in einem leeren Zustand der Schaufel 54 für eine Last von 17t ausgelegt ist, da bei der leeren Schaufel 54 ein Grossteil der durch das Gegengewicht erzeugten Kraft F_{Gegengewicht} über die Hinterachse 53 abgeleitet werden muss und somit diese Last auf der Hinterachse 53 lastet. Die Vorderachse 52 hingegen ist so auszulegen, dass mit der Schaufel 54 auch festes Material von einer Wand losgebrochen werden kann, wobei in einem solchen Lastzustand davon ausgegangen wird, dass dadurch die Hinterachse 53 angehoben werden kann. Daraus ergibt sich, dass in dem genannten Beispiel die Vorderachse 52 für eine Last von 37t ausgelegt werden muss. Das Leergewicht eines solchen Radladers beträgt in diesem Beispiel 27t. Unter Zuladung der maximalen Nennlast von 10t beträgt das Fahrzeuggewicht beladen somit 37t. Aufgrund der zuvor geschilderten Voraussetzungen müssen die Vorderachse 52 und die Hinterachse 53 jedoch so dimensioniert werden, dass sie zusammen eine Last von 54t aufnehmen könnten. Daraus ergibt sich, dass sowohl ein Antrieb als auch die verschiedenen Bauteile, wie Achsen etc. eines Radladers 50 aus dem Stand der Technik im Verhältnis zu einer maximalen Fahrzeuglast deutlich überdimensioniert ausgeführt werden müssen. Bei der Überdimensionierung der Antriebe spielt weiterhin eine Rolle, dass der Radlader 50 in allen Fahrsituationen genügend Traktion haben muss. Folglich müssen die Achsen 52, 53 auch aufgrund ihres übertragbaren Drehmoments bei den unterschiedlichen Lastverteilungen überdimensioniert werden. Ein weiterer Nachteil der Arbeitsmaschinen/-fahrzeuge aus dem Stand der Technik ist, dass diese durch ihren Aufbau/ihre Bauart in der Regel eine sehr geringe Wendigkeit und durch die zuvor geschilderte Überdimensionierung zudem hohe Verlustleistungen aufweisen.

In Figur 2 ist eine erfindungsgemässe Arbeitsmaschine 1 dargestellt, die die Nachteile der Arbeitsmaschinen/-fahrzeuge aus dem Stand der Technik beseitigt oder zumindest minimiert. Die erfindungsgemässe Arbeitsmaschine 1 umfasst lediglich eine Hauptfahrzeugachse 3, an der beidseitig Radelemente 4 angeordnet sind. Den Radelementen 4 sind jeweils separate Antriebseinheiten zugeordnet, durch die über eine Steuerung die zumindest einen Regelkreis umfasst, eine Selbstbalancierung der Arbeitsmaschine 1 um die Hauptfahrzeugachse 3 bewirkt wird. Dadurch weist die Arbeitsmaschine 1 eine geringere Teilezahl auf und es muss nur die eine Hauptfahrzeugachse 3 sowie die daran angeordneten Radelemente 3 und die zugehörigen Antriebseinheiten für die verschiedenen Lastzustände ausgelegt werden, die auftreten können.

Die Arbeitsmaschine 1 der Figur 2 umfasst weiterhin ein Arbeitsgerät 2.1. Bei dem Arbeitsgerät 2.1 dieses Ausführungsbeispiels handelt es sich um eine Schaufel 31, die beispielsweise der Schaufel 54 des Radladers 50 aus dem Stand der Technik entsprechen kann. Die Schaufel 31 ist an einer Arbeitsgeräteaufnahme 24 über einen Schwenkarm 10 und einen Arbeitsarm 9 an einem Basiselement 7 der Arbeitsmaschine 1 befestigt.

Weiterhin umfasst die Arbeitsmaschine 1 ein Gegengewicht 5. Eine Position des Gegengewichts 5 gegenüber der Hauptfahrzeugachse 3 ist über die Steuerung regelbar. Das Gegengewicht 5 ist für eine erfindungsgemässe Arbeitsmaschine 1 notwendig, da sich bei einem um eine Hauptfahrzeugachse selbst balancierendes Fahrzeug, wie hier die erfindungsgemässe Arbeitsmaschine 1, der Schwerpunkt des Fahrzeugs stets über der Hauptfahrzeugachse befinden muss und das Gegengewicht somit zum Ausgleich einer Schwerpunktverschiebung, die durch das Arbeitsgerät 2.1 hervorgerufen wird, genutzt wird. Eine solche selbstbalancierende Arbeitsmaschine 1 entspricht einem inversen Pendel. Folglich kann über eine Positionsverschiebung des Gegengewichts 5 gegenüber der Hauptfahrzeugachse 3 einerseits die Arbeitsmaschine 1 um die Hauptfahrzeugachse 3 ausbalanciert werden und andererseits in ihren Bewegungsrichtungen gesteuert werden. Eine Positionsverschiebung des Gegengewichts 5 aus der stabilen Lage führt dazu, dass die Steuerung dies feststellt und die Radelemente 4 sich in diese Richtung bewegen, um wieder ein Gleichgewicht herzustellen. Dieses Prinzip entspricht dabei den aus dem Stand der Technik bekannten selbst balancierenden elektrischen Rollern, die unter dem Markennamen Segway bekannt sind, bei denen jedoch aufgrund des fehlenden Gegengewichts keine Arbeitsgeräte angebracht werden können.

In dem gezeigten Ausführungsbeispiel der Figur 2 ist das Gegengewicht 5 über Hebelelemente 8.1 und 8.2 mit dem Basiselement 7 verbunden. Weiterhin ist an dem Gegengewicht 5 über eine Hilfsradaufhängung 15 ein Hilfsrad 6 angeordnet. Das Hilfsrad 6 kann beispielsweise beim Be-/Entladen der Schaufel 31 auf dem Boden aufgesetzt werden, um einerseits einen zusätzlichen Auflagepunkt zur Verfügung zu stellen und andererseits etwaige Lastspitzen, die beispielsweise durch ein Herausbrechen von Material aus einer Wand entstehen können, aufzufangen. Dabei ist zu beachten, dass die Hauptlast stets auf der Hauptfahrzeugachse 3 lastet.

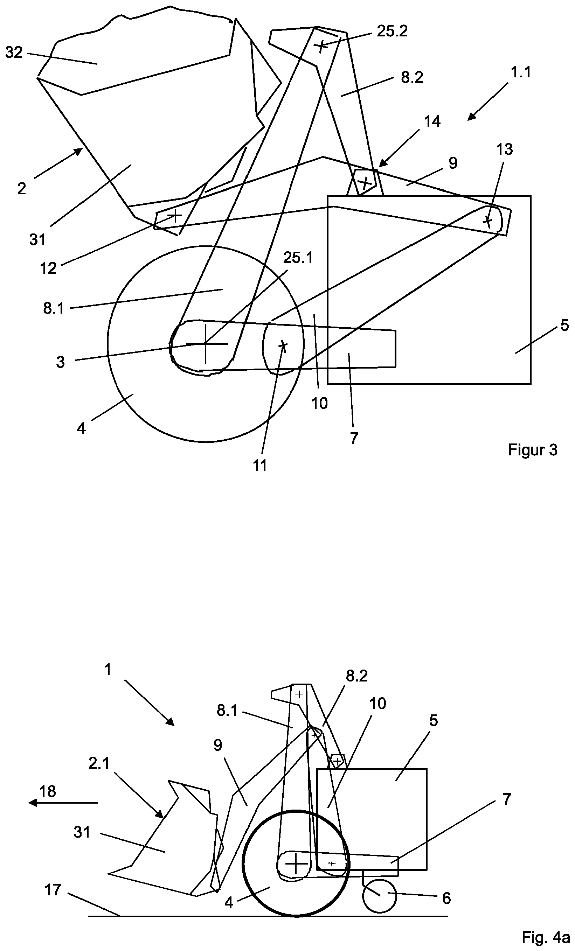

In Figur 3 ist ein weiteres Ausführungsbeispiel einer Arbeitsmaschine 1.1 dargestellt, bei der an dem Gegengewicht 5 kein Hilfsrad angeordnet ist. Die Arbeitsmaschine 1.1 der Figur 3 weist als Arbeitsgerät 2 ebenfalls eine Schaufel 31 auf. Die Schaufel 31 ist in dem dargestellten Beispiel mit einem Ladegut 32 befüllt. Weiterhin ist in Figur 3 ein weiterer Vorteil der vorliegenden Erfindung dargestellt, nämlich dass das Arbeitsgerät 2 über den Schwenkhebel 10 und den Arbeitsarm 9 mit dem Basiselement 7 der Arbeitsmaschine 1.1 verbunden ist. Der Schwenkhebel 10 ist dabei vorzugsweise hinter einer Hauptfahrzeugachse 3 drehbar um eine Schwenkarmdrehachse 11 gelagert. Durch die Anordnung der Schwenkarmdrehachse 11 hinter der Hauptfahrzeugachse 3 wird ermöglicht, dass die Schaufel 31 in dem beladenen Zustand näher an die Hauptfahrzeugachse 3 herangeführt werden kann. Dadurch kann auch das Gegengewicht 5 bei beladener Schaufel 31 nahe an die Hauptfahrzeugachse 3 über die Hebelelemente 8.1 und 8.2 herangezogen werden, so dass deutlich geringere Fahrzeugdimensionen als bei einem Fahrzeug aus dem Stand der Technik, wie es in Figur 1 dargestellt ist, entstehen. Zudem ist die Arbeitsmaschine 1.1 dadurch deutlich agiler und wendiger als eine Arbeitsmaschine/ein Fahrzeug aus dem Stand der Technik.

Da den Radelementen 4 jeweils eine separate Antriebseinheit, bei der es sich beispielsweise um einen Elektromotor handeln kann, zugeordnet ist, kann durch eine Drehung der Radelemente 4 in entgegengesetzte Richtung die Arbeitsmaschine 1.1 sogar auf der Stelle gewendet werden. Das Gegengewicht 5, die Hebelelemente 8.1 und 8.2 sowie der Schwenkarm 10 und der Arbeitsarm 9 sind bei einer erfindungsgemässen Arbeitsmaschine 1.1 so angeordnet und/oder weisen solche Aussenkonturen auf, dass auch eine Position, wie in Figur 3 dargestellt ist, ermöglicht wird.

Bei einem Be- oder Entladen des Arbeitsgeräts 2 der Arbeitsmaschine 1.1 können die Schaufel 31 und der Arbeitsarm 9 und/oder der Arbeitsarm 9 und der Schwenkarm 10 und/oder der Schwenkarm 10 gegenüber dem Basiselement 7 um die Arbeitsgerätedrehachse 12, die Arbeitsarmdrehachse 13 und/oder die Schwenkarmdrehachse 11 über Antriebselemente zueinander verstellt werden. Bei den Antriebselementen kann es sich beispielsweise um Elektromotoren handeln oder die Drehung der einzelnen Elemente zueinander erfolgt über nicht dargestellte Hydraulikelemente, wie beispielsweise Hydraulikzylinder.

Die Beladung einer Schaufel 31 einer Arbeitsmaschine 1, wie sie in Figur 2 dargestellt wurde, wird im Folgenden anhand der Figuren 4a bis 4k dargestellt.

Die Figur 4a zeigt die Arbeitsmaschine 1 in einer Position, in der sie auf einem Untergrund 17 in eine Fahrtrichtung 18 fährt. Das Hilfsrad 6 berührt dabei den Untergrund 17 nicht, wird also in diesem Zustand lastlos gehalten, um eine schnelle Beweglichkeit der Arbeitsmaschine 1 zu gewährleisten. In einem Ausführungsbeispiel umfasst die Steuerung der Arbeitsmaschine neben dem Regelkreis für die Selbstbalancierung um die Hauptfahrzeugachse 3, noch einen weiteren Regelkreis zur Lastüberwachung des zumindest einen Hilfsrads 6. Bei dem Regelkreis für die Selbstbalancierung der Arbeitsmaschine 1 um die Hauptfahrzeugachse 3 werden vorzugsweise Neigungssensoren, Gleichgewichtsensoren und/oder Beschleunigungssensoren genutzt. Dabei können als Neigungssensoren und Gleichgewichtssensoren beispielsweise Halbleitergyroskope zum Einsatz kommen. Weiterhin können Lastsensoren in dem Regelkreis umfasst sein, um beispielsweise eine auf die Schaufel 31/das Arbeitsgerät 2.1 wirkende Last zu ermitteln und das Gegengewicht 5 entsprechend zur Selbstbalancierung zu verschieben.

Bei dem zweiten Regelkreis kommen vorzugsweise Lastsensoren zum Einsatz, die eine Last auf das zumindest eine Hilfsrad 6 messen. Durch die Steuerung kann über die Daten des Regelkreises bzw. der Regelkreise die Verschiebung des Schwerpunkts der Arbeitsmaschine 1 so geregelt werden, dass sich einerseits die Arbeitsmaschine 1 um die Hauptfahrzeugachse 3 selbst ausbalanciert und in einem Ausführungsbeispiel zudem geregelt werden kann, dass die Last auf dem Hilfsrad 6 innerhalb einer vorgewählten Lastspanne liegt, wobei diese Last immer deutlich kleiner ist als die Last, die auf der Hauptfahrzeugachse 3 lastet. Die Last sollte dabei so gering sein, dass sie eine schnelle Drehung des Fahrzeugs um die Hauptachse 3 nicht wesentlich behindert. Bei einer bevorzugten Ausführung der Arbeitsmaschine 1 werden über die Steuerung die Daten der beiden Regelkreise bezüglich der Selbstbalancierung sowie der Last auf dem Hilfsrad 6 genutzt. Durch den zweiten Regelkreis der die Last an dem Hilfsrad 5 misst, können insbesondere hochdynamische Veränderungen der Schwerpunktlage besser geregelt werden, als mit nur einem Regelkreis, der mittels Halbleitergyroskopen und Beschleunigungssensoren die Selbstbalance der Arbeitsmaschine 1 erhalten soll.

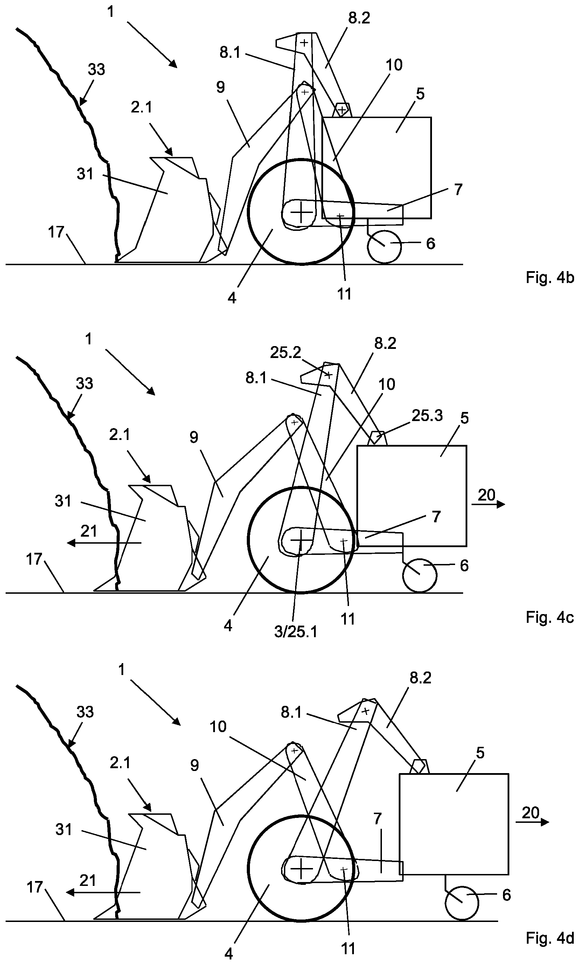

In Figur 4b ist die Arbeitsmaschine 1 an einem Lagerplatz mit Schüttgut 33 angelangt. Um die Schaufel 31 mit dem Schüttgut 33 zu beladen, können nun die Radelemente 4 beidseitig der Hauptfahrzeugachse 3 über nicht dargestellte Bremseneinheiten ortsfest gegenüber dem Schüttgut 33 platziert werden. Weiterhin ist in der Figur 4b zu sehen, dass die Schaufel für den Beladevorgang zu dem Untergrund 17 hin bewegt wurde. Zudem ist ersichtlich, dass durch die Steuerung das Gegengewicht so verschoben wurde, dass nun das Hilfsrad 6 ebenfalls den Untergrund 17 berührt und dadurch beispielsweise zum Auffangen von Lastspitzen während des Beladevorgangs genutzt werden kann. In einem weiteren Ausführungsbeispiel kann das Hilfsrad 17 auch durch ein Verstellen der Hilfsradaufhängung 15 zu dem Untergrund 17 hin bewegt werden.

In Figur 4c ist der darauf folgende Beginn des Beladevorgangs der Schaufel 31 dargestellt. Um Die Schaufel mit dem Schüttgut 33 zu beladen, wird diese in Richtung der Schaufelbewegung 21 bewegt. Hierfür wird der Schwenkarm 10 um die Schwenkarmdrehachse 11 zu dem Schüttgut 33 hin verdreht, so dass sich die Schaufel 31 in Richtung der Schaufelbewegung 21 zu dem Schüttgut 33 hin bewegt. Um die dadurch entstehende Verschiebung des Schwerpunktes hin zu der Schaufel 31 auszugleichen, wird das Gegengewicht 5 in Richtung der Gegengewichtbewegung 20 von der Hauptfahrzeugachse 3 weg verschoben, so dass der Schwerpunkt über der Hauptfahrzeugachse 3 bleibt. Hierfür werden die Hebelelemente 8.1 und 8.2 über nicht dargestellte Antriebselemente um die Hebelarmdrehachsen 25.1 bis 25.3 zueinander verschwenkt. Bei den Antriebselementen für die Verschiebung des Gegengewichts 5 über die Hebelelemente 8.1 und 8.2 können beispielsweise Hydraulikelemente, wie Hydraulikzylinder und/oder Elektromotoren genutzt werden. In einem typischen Ausführungsbeispiel umfasst die Arbeitsmaschine 1 eine Hydrauliksteuerung zur Steuerung der Hydraulikelemente, die für die Positionsverschiebung des Gegengewichts 5 für die Hebelelemente 8.1 und 8.2 genutzt werden, so dass das Gegengewicht 5 bei der Positionsverschiebung in Richtung der Gegengewichtsbewegung 20 in einer im wesentlichen horizontalen Lage gehalten werden kann.

Dadurch ergibt sich der Vorteil, dass in dem Gegengewicht ein Energiespeicher und/oder ein Motor zur Energieumwandlung angeordnet wird. Der Energiespeicher und/oder der Motor zur Energieumwandlung stellen dabei die notwendige Energie zum Betrieb der Arbeitsmaschine 1 zur Verfügung. Bei dem Energiespeicher handelt es sich beispielsweise um Akkumulatoren zur Speicherung elektrischer Energie und/oder Hydraulikspeicher. Bei dem Motor zur Energieumwandlung handelt es sich beispielsweise um einen Verbrennungsmotor, wie er aus dem Stand der Technik bekannt ist, Elektromotoren und/oder Hydraulikpumpen.

In weiteren, nicht dargestellten Ausführungsbeispielen ist das Gegengewicht 5 mit dem Basiselement 7 anstelle der Hebelelemente 8.1 und 8.2 über ein Scherenelement verbunden oder ist verschiebbar auf einem Linearlager angeordnet, wobei das Linearlager vorzugsweise an dem Basiselement 7 der Arbeitsmaschine 1 angeordnet ist. Bei dem Linearlager handelt es sich nur beispielsweise um Schienen, auf denen das Gegengewicht verfahrbar angeordnet ist.

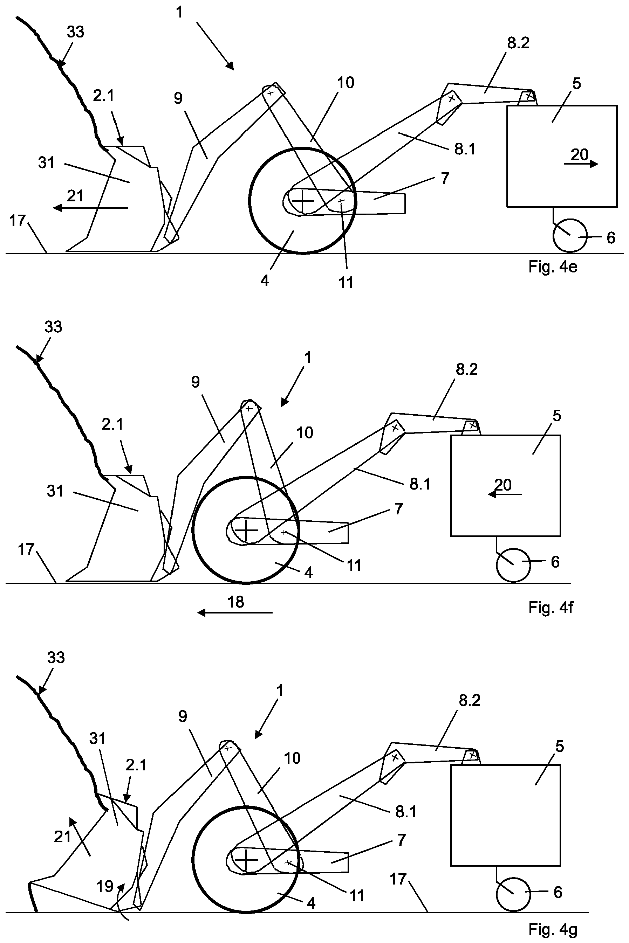

Die Figur 4d zeigt, dass bei einem weiteren Eindringen der Schaufel 31 in Richtung der Schaufelbewegung 21 in das Schüttgut 33 das Gegengewicht 5 ebenfalls in Richtung der Gegengewichtbewegung 20 durch die Steuerung der Arbeitsmaschine verschoben wird. Die Arbeitsschaufel 31 wird dabei über die Antriebselemente, die dem Schwenkarm 10 sowie dem Arbeitsarm 9 zugeordnet sind, in das Schüttgut in Richtung der Schaufelbewegung 21 geschoben, bis die Schaufel, wie in Figur 4e dargestellt, vollständig in das Schüttgut 33 eingedrungen ist. Mit der stetigen Bewegung der Schaufel 31 in Richtung der Schaufelbewegung 21 wird durch die Steuerung der Arbeitsmaschine auch stetig das Gegengewicht 5 in Richtung der Gegengewichtbewegung 20 von der Hauptfahrzeugachse 3 weg verschoben, so dass der Fahrzeugschwerpunkt über der Hauptachse 3 bleibt.

Anschliessend werden, wie in Figur 4f dargestellt, für den weiteren Beladevorgang die Bremseneinheiten der Radelemente 4 gelöst, so dass sich die Hauptfahrzeugachse 3 mit den Radelementen 4 in der Fahrtrichtung 18 hin zu der Schaufel 31 bewegen kann. In dem gezeigten Ausführungsbeispiel bleibt dabei der Abstand des Gegengewichts zu der Hauptfahrzeugachse 3 im Wesentlichen konstant, so dass eine Last, die auf das Hilfsrad 6 wirkt, ansteigt. Dadurch verschiebt sich der Schwerpunkt der Arbeitsmaschine 1 in einem durch die Steuerung regelbaren Bereich, weg von der Hauptfahrzeugachse 3 hin zu dem Gegengewicht 5. Dies ermöglicht es, dass auf eine schnelle und schlagartige Verschiebung des Gegengewichts 5 verzichtet werden kann, wenn, wie in Figur 4g gezeigt, durch eine Bewegung des Schwenkarms 10 sowie des Arbeitsarms 9 und eine Drehung der Schaufel in Richtung der Schaufeldrehung 19 die Schaufel in Richtung der Schaufelbewegung 21 nach oben bewegt wird und sich durch die Aufnahme des Schüttguts 33 und das Abheben der Schaufel 31 von dem Untergrund 17 der Schwerpunkt der Arbeitsmaschine schlagartig in Richtung der Schaufel 31 bewegt.

Auch mit der Arbeitsmaschine 1 ohne ein Hilfsrad 6 sowie ohne eine Hilfsradsteuerung ist dies möglich. Es muss jedoch gewährleistet sein, dass das Gegengewicht 5 seine Position sehr schnell verändern kann. Hierfür weist eine Arbeitsmaschine 1 in einem typischen Ausführungsbeispiel zumindest einen Hydraulikspeicher auf, der schneller einen hohen Hydraulikdruck zur Verstellung der Hebelarme 8.1 und 8.2 zur Verfügung stellen kann als Hydraulikpumpen und/oder einen Hydraulikspeicher, der durch eine Fähigkeit zur Aufnahme einer Hydraulikflüssigkeit eine schnelle Entlastung der Hydraulikelemente ermöglicht.

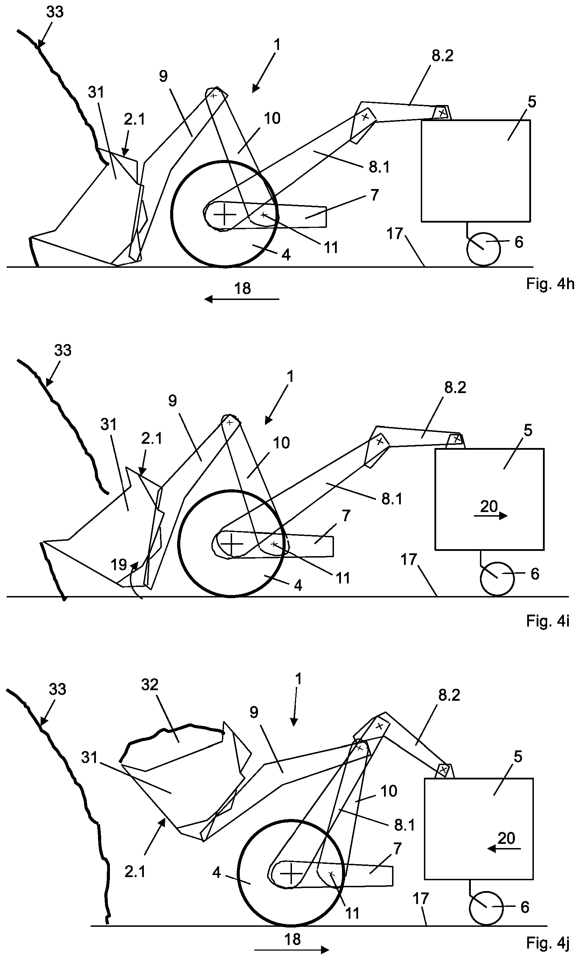

In den Figuren 4h und 4i ist ein Fortführen des Anhebens der Schaufel 31 dargestellt, das durch eine Drehung der Schaufel in Richtung der Schaufeldrehung 19 sowie eine Bewegung/ein Verschwenken des Arbeitsarms 9 und des Schwenkarms 10 bewerkstelligt wird. Um den Schwerpunkt über der Hauptfahrzeugachse 3 zu halten, wird die Hauptfahrzeugachse 3 der Arbeitsmaschine 1 und über die Radelemente 4 in Fahrtrichtung 18 hin zu der Schaufel 31 bewegt und das Gegengewicht in Richtung der Gegengewichtbewegung 20 weg von der Schaufel 31. Die Bewegung der Hauptfahrzeugachse in Fahrtrichtung 18 und/oder die Bewegung des Gegengewichts 5 in Richtung der Gegengewichtbewegung 20 erfolgt dabei jeweils hin oder weg von der Hauptfahrzeugachse 3, so dass der Schwerpunkt der Arbeitsmaschine 1 über der Hauptfahrzeugachse 3 liegt, oder sofern eine Last auf dem Hilfsrad 6 lasten darf, im wesentlichen über der Hauptfahrzeugachse 3, wobei in einem solchen Ausführungsbeispiel eine leichte Verschiebung des Schwerpunktes hin zu dem Gegengewicht 5 zulässig ist.

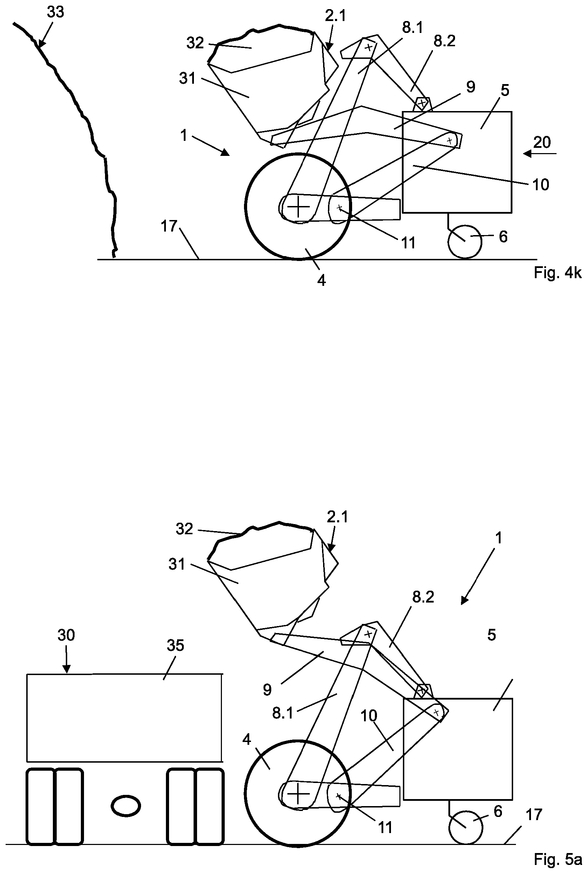

In den Figuren 4j und 4k ist anschliessend dargestellt, wie die Schaufel 31 mit dem Ladegut 32 durch ein Verschwenken des Schwenkarmes 10 um die Schwenkarmachse 11 hin zu der Hauptfahrzeugachse 3 bewegt wird und gleichzeitig das Gegengewicht 5 ebenfalls hin zu der Hauptfahrzeugachse 3 bewegt wird. Die Bewegung des Gegengewichts 5 hin zu der Hauptfahrzeugachse 3 erfolgt dabei einerseits über die nicht dargestellte Hydrauliksteuerung und die zugehörigen Hydraulikelemente sowie über eine Bewegung der Hauptfahrzeugachse 3 durch die Radelemente 4 hin zu dem Gegengewicht 5. In der Figur 4k ist die Arbeitsmaschine 1 mit einer beladenen Schaufel 31 in einer Fahrposition dargestellt. Durch das Heranziehen der Schaufel 31 über die Hauptfahrzeugachse 3 kann dabei ein sehr kurzes und wendiges Fahrzeug geschaffen werden, das eine höhere Agilität als Fahrzeuge/Arbeitsmaschinen aus dem Stand der Technik aufweist.

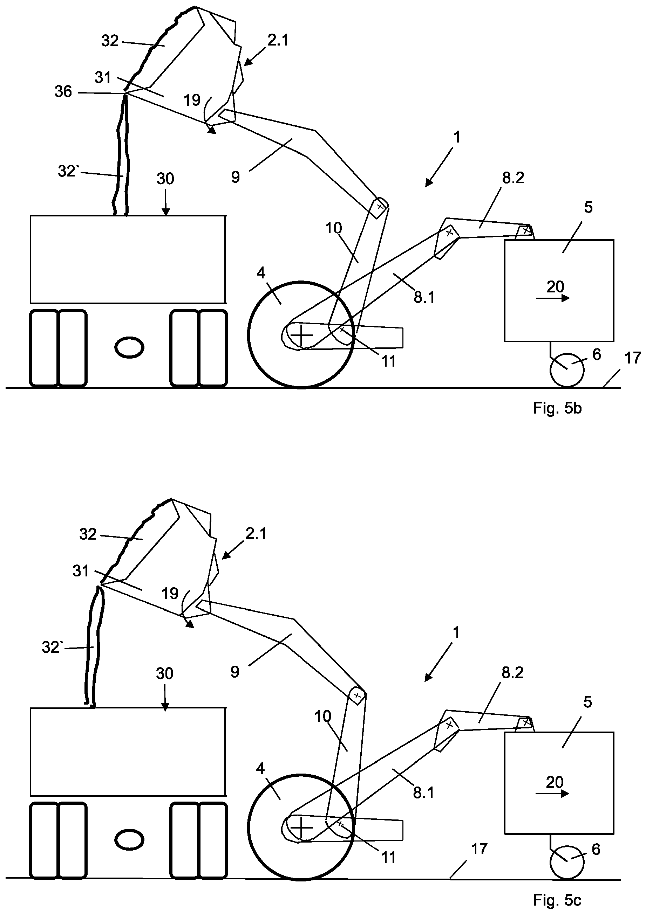

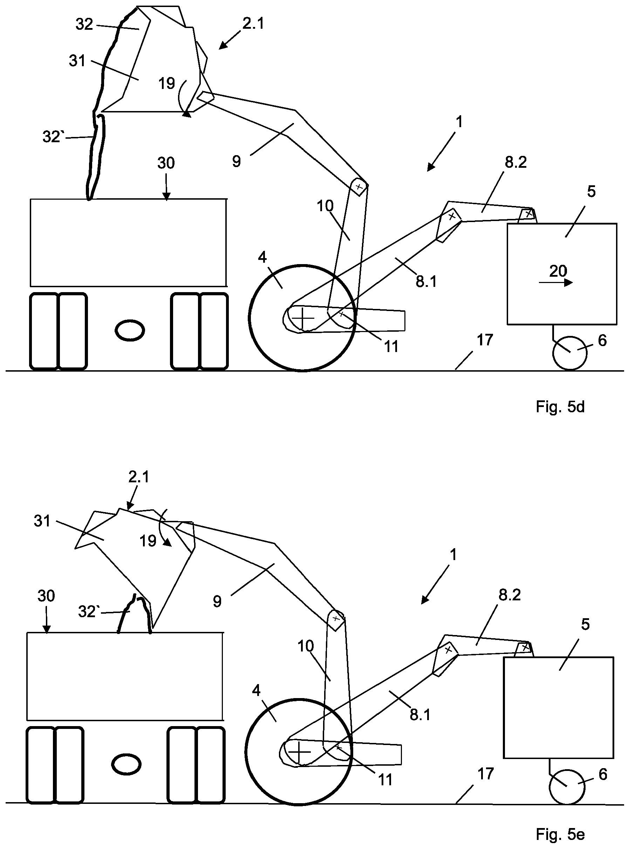

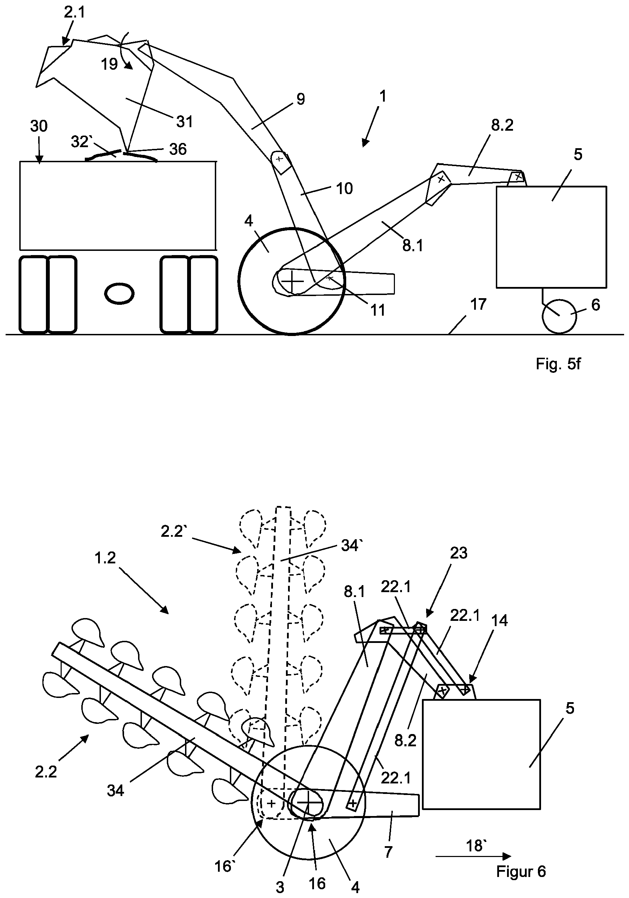

In den Figuren 5a bis 5f ist anschliessend noch ein Entladevorgang der Schaufel 31 der Arbeitsmaschine 1 des Ausführungsbeispiels einer Arbeitsmaschine 1 nach Figur 2 dargestellt.

Wie in Figur 5a dargestellt, fährt die Arbeitsmaschine 1 zunächst an ein Transportfahrzeug 30 heran, bevor über die Bremseneinheiten der Radelemente 4 die Hauptfahrzeugachse 3 der Arbeitsmaschine 1 in einer ortsfesten Position gegenüber dem Transportfahrzeug 30 gehalten wird. Über den Schenkarm 10 sowie den Arbeitsarm 9 kann anschliessend die Schaufel 31 angehoben werden, so dass sich diese oberhalb einer Ladebordwand 35 des Transportfahrzeugs 30 befindet. Anschliessend wird die Schaufel 31 über eine Bewegung/ein Verschwenken des Schwenkarms 10 und/oder des Arbeitsarms 9 sowie eine gleichzeitige Drehung der Schaufel 31 um die Arbeitsgeräteaufnahme 24 in Richtung der Schaufeldrehung 19 über eine Mitte des Transportfahrzeuges 30 gebracht. Durch die Drehung der Schaufel 31 in Richtung der Schaufeldrehung 19 beginnt der Entladevorgang, so dass das Ladegut 32 in das Transportfahrzeug 30 hinabfällt. Um die Verschiebung des Schwerpunkts durch die Positionsverschiebung der Schaufel 31 auszugleichen, wird gleichzeitig das Gegengewicht 20 weg von der Hauptfahrzeugachse 3 bewegt.

In den Figuren 5b bis 5f ist zudem der weitere Vorteil einer erfindungsgemässen Arbeitsmaschine dargestellt, die, wie in dem Ausführungsbeispiel gezeigt, mit einem Arbeitsgerät 2.1 ausgestattet ist, dass durch die Anordnung des Arbeitsgerätes 2.1 (hier der Schaufel 31) an dem Schwenkarm 10 und dem Arbeitsarm 9 kann die Hauptfahrzeugachse 3 der Arbeitsmaschine 1 ortsfest im Verhältnis zu dem Transportfahrzeug 30 gehalten werden kann. Die notwendige Bewegung der Schaufel 31, so dass das Ladegut 32 an der gewünschten Position auf die Ladefläche des Transportfahrzeugs 30 gekippt werden kann, wird durch den zweiteiligen Aufbau der Verbindung zwischen Basiselement 7 und Arbeitsgerät 2.1 über den Schwenkarm 10 und den Arbeitsarm 9 ermöglicht. Eine Schwerpunktverschiebung, die dabei einerseits durch die Positionsverschiebung der Schaufel 31, als auch durch die sinkende Last der Schaufel 31, die aufgrund des herausfallenden Ladeguts 32' geringer wird, wird durch ein Verschieben des Gegengewichts 5 in eine Richtung der Gegengewichtsbewegung 20 ausgeglichen. In einem typischen Ausführungsbeispiel wird bei einem solchen Entladevorgang darauf geachtet, dass sich die Schaufelspitze 36 im Wesentlichen über einer Mitte des Transportfahrzeugs 30 befindet, so dass das Ladegut 32' statisch gleichmässig auf der Ladefläche verteilt wird. Bei Radladern aus dem Stand der Technik muss der Fahrzeugführer hierfür neben einer Schaufeldrehung 19 gleichzeitig noch an das Transportfahrzeug 30 hinrollen, so dass über die Lagerung des Arbeitsgeräts 2.1 an dem Schwenkarm 10 und dem Arbeitsarm 9 durch die Arbeitsmaschine 1 auch der Entladevorgang erleichtert wird.

Abschliessend ist in Figur 6 ein weiteres Ausführungsbeispiel einer erfindungsgemässen Arbeitsmaschine 1.2 dargestellt. Die Arbeitsmaschine 1.2 gemäss des Ausführungsbeispiels der Figur 6 umfasst eine Parallelogrammführung 23 für das Gegengewicht 5, so dass das Gegengewicht 5 bei einer Positionsverschiebung in einer im Wesentlichen horizontalen Lage gehalten wird. Hierfür ist das Gegengewicht 5 mit dem Basiselement 7 zusätzlich zu den Hebelelementen 8.1 und 8.2 mit Hilfshebelelementen 22.1 bis 22.3 verbunden. Durch die Parallelogrammführung 23 wird dabei erreicht, dass sich das Gegengewicht 5 bei einer Positionsverschiebung in einer Lage hält, die einer Lage des Basiselements 7 entspricht, welches durch die Steuerung über die Neigungssensoren, Beschleunigungssensoren und/oder Lastsensoren in einer im wesentlichen horizontalen Lage gehalten wird.

Weiterhin unterscheidet sich die Arbeitsmaschine 1.2 von den Arbeitsmaschinen 1 und 1.1 aus den vorherigen Figuren dadurch, dass die Arbeitsmaschine 1.2 anstelle des Arbeitsgeräts eine Aufnahme 16, 16' für ein Arbeitsgerät 2.2, 2.2' umfasst. Bei dem Arbeitsgerät 2.2 handelt es sich in dem dargestellten Ausführungsbeispiel um einen Pflug 34, wie er in der Landwirtschaft eingesetzt wird. Als Arbeitsgerät 2.2, das an der Aufnahme 16 angeordnet wird, sind dabei sämtliche Arbeitsgeräte denkbar, die in der Bauwesen und/oder der Landwirtschaft genutzt werden und ein Trägerfahrzeug benötigen.

Durch die durchgezogenen Linien ist eine erste Möglichkeit einer Aufnahme eines Arbeitsgeräts 2.2 dargestellt. Dabei befindet sich die Aufnahme 16 für das Arbeitsgerät 2.2 im Bereich der Hauptfahrzeugachse 3 und das Arbeitsgerät 2.2 kann beispielsweise um die Aufnahme 16 bzw. Hauptfahrzeugachse 3 verschwenkt werden. Die Arbeitsmaschine 1.2 würde sich dabei in dem so dargestellten Ausführungsbeispiel in einer Ruheposition befinden.

Durch die gestrichelte Darstellung ist eine weitere Möglichkeit einer Aufnahme 16' dargestellt, deren Drehachse sich ausserhalb der Hauptfahrzeugachse 3 befindet. Das Arbeitsgerät 2.2' ist dabei in einer Transportstellung dargestellt, so dass sich die Arbeitsmaschine 1.2, sofern das Gegengewicht 5 wie dargestellt, angeordnet wäre, in Richtung der Fahrtrichtung 18' bewegen würde.

### Bezugszeichenliste

| | | | | | |
|---|---|---|---|---|---|
| 1 | Arbeitsmaschine | 34 | Pflug | F | Kraft |
| 2 | Arbeitsgerät | 35 | Ladebordwand | | |
| 3 | Hauptfahrzeugachse | 36 | Schaufelspitze | | |
| 4 | Radelement | 37 | | | |
| 5 | Gegengewicht | 38 | | | |
| 6 | Hilfsrad | 39 | | | |
| 7 | Basiselement | 40 | | | |
| 8 | Hebelelement | 41 | | | |
| 9 | Arbeitsarm | 42 | | | |
| 10 | Schwenkarm | 43 | | | |
| 11 | Schwenkarm-Drehachse | 44 | | | |
| 12 | Arbeitsgerät-Drehachse | 45 | | | |
| 13 | Arbeitsarm-Drehachse | 46 | | | |
| 14 | Gegengewichtaufhängung | 47 | | | |
| 15 | Hilfsradaufhängung | 48 | | | |
| 16 | Aufnahme | 49 | | | |
| 17 | Untergrund | 50 | Radlader | | |
| 18 | Fahrtrichtung | 51 | Knickachse | | |
| 19 | Schaufeldrehung | 52 | Vorderachse | | |
| 20 | Gegengewichtbewegung | 53 | Hinterachse | | |
| 21 | Schaufelbewegung | 54 | Schaufel | | |
| 22 | Hilfshebelelement | 55 | Arbeitsarm | | |
| 23 | Parallelogrammführung | 56 | Drehachse | | |
| 24 | Arbeitsgeräteaufnahme | 57 | Rad | | |
| 25 | Hebelarmdrehachse | 58 | | | |
| 26 | | 59 | | | |
| 27 | | 60 | | | |
| 28 | | 61 | | | |
| 29 | | 62 | | | |
| 30 | Transportfahrzeug | 63 | | | |
| 31 | Schaufel | 64 | | | |
| 32 | Ladegut | 65 | | | |
| 33 | Schüttgut | 66 | | | |

## Patentansprüche

1. Arbeitsmaschine (1, 1.1, 1.2) umfassend:
- ein Arbeitsgerät (2, 2.1, 2.2) oder eine Aufnahme (16) für ein Arbeitsgerät,
- genau eine Hauptfahrzeugachse (3),
- beidseitig an der Hauptfahrzeugachse (3) angeordnete Radelemente (4),
- den Radelementen (4) zugeordnete Antriebseinheiten,
- zumindest eine Steuerung, wobei die Steuerung zumindest einen Regelkreis umfasst und eine Selbstbalancierung der Arbeitsmaschine (1, 1.1, 1.2) um die Hauptfahrzeugachse (3) bewirkt, und
- ein Gegengewicht (5), wobei eine Position des Gegengewichts (5) gegenüber der Hauptfahrzeugachse (3) über die Steuerung regelbar ist, sodass über eine Positionsverschiebung des Gegengewichts (5) die Arbeitsmaschine (1, 1.1, 1.2) um die Hauptfahrzeugachse (3) ausbalanciert und in ihrer Bewegungsrichtungen gesteuert werden kann, **dadurch gekennzeichnet, dass** das Gegengewicht (5) einen Energiespeicher und/oder einen Motor zur Energieumwandlung umfasst.

2. Arbeitsmaschine (1, 1.1, 1.2) nach Anspruch 1, **dadurch gekennzeichnet, dass** der Regelkreis ein elektronsicher Regelkreis ist und zumindest Neigungssensoren und/oder Lastsensoren umfasst.

3. Arbeitsmaschine (1, 1.1, 1.2) nach einem der vorherigen Ansprüche, **dadurch gekennzeichnet, dass** in und/oder an dem Gegengewicht (5) ein Hilfsrad (6) angeordnet ist.

4. Arbeitsmaschine (1, 1.1, 1.2) nach einem der vorherigen Ansprüche, **dadurch gekennzeichnet, dass** die Radelemente (4) eine Bremseneinheit umfassen.

5. Arbeitsmaschine (1, 1.1, 1.2) nach einem der vorherigen Ansprüche, **dadurch gekennzeichnet, dass** das Gegengewicht (5) zumindest über zwei Hebelelemente (8.1, 8.2) mit einem Basiselement (7) verbunden ist.

6. Arbeitsmaschine (1, 1.1, 1.2) nach einem der vorherigen Ansprüche, **gekennzeichnet durch** eine Hydrauliksteuerung oder eine Parallelogrammführung (23) für das Gegengewicht (5), sodass das Gegengewicht (5) bei der Positionsverschiebung in einer im Wesentlichen horizontalen Lage haltbar ist.

7. Arbeitsmaschine (1, 1.1, 1.2) nach einem der Ansprüche 1 bis 4, **dadurch gekennzeichnet, dass** das Gegengewicht (5) über ein Scherenelement mit einem Basiselement (7) verbunden ist oder verschiebbar auf einem Linearlager angeordnet ist.

8. Arbeitsmaschine (1, 1.1, 1.2) nach einem der vorherigen Ansprüche, **gekennzeichnet durch** ein Steuerelement, sodass die Arbeitsmaschine (1, 1.1, 1.2) eine autonome Steuerbarkeit oder eine Fernsteuerbarkeit aufweist.

9. Arbeitsmaschine (1, 1.1, 1.2) nach Anspruch 8, **dadurch gekennzeichnet, dass** das Steuerelement Kameras und/oder Sensorelemente umfasst.

10. Arbeitsmaschine (1, 1.1, 1.2) nach einem der vorherigen Ansprüche, **dadurch gekennzeichnet, dass** das Arbeitsgerät über einen Arbeitsarm (9) und einen Schwenkhebel (10) mit einem Basiselement (7) verbunden ist.

11. Arbeitsmaschine (1, 1.1, 1.2) nach Anspruch 10, **dadurch gekennzeichnet, dass** der Schwenkhebel (10) an einem Basiselement (7) hinter der nur einen Hauptfahrzeugachse (3) gelagert ist.

12. Arbeitsmaschine (1, 1.1, 1.2) nach einem der vorherigen Ansprüche **gekennzeichnet durch** ein Impulsladeverfahren.

13. Arbeitsmaschine (1, 1.1, 1.2) nach einem der vorherigen Ansprüche **gekennzeichnet durch** einen hydraulischen Speicher.

14. Arbeitsmaschine (1, 1.1, 1.2) nach einem der vorherigen Ansprüche, **dadurch gekennzeichnet, dass** das Arbeitsgerät (2, 2.1) eine Schaufel (31) ist.

## Claims

1. A work machine (1, 1.1, 1.2) comprising:
- an implement (2, 2.1, 2.2) or a mount (16) for an implement,
- precisely one primary vehicle axle (3),
- wheel elements (4) which are arranged on both sides of the vehicle axle (3),
- drive units which are assigned to the wheel elements (4),
- at least one controller, wherein the controller comprises at least one closed-loop control circuit and brings about self-balancing of the work machine (1, 1.1, 1.2) about the vehicle axle (3), and
- a counterweight (5), wherein a position of the counterweight (5) relative to the vehicle axle (3) is controllable by means of the controller, so that by shifting the position of the counterweight (5) the work machine (1, 1.1, 1.2) can be balanced about the vehicle axle (3) and can be controlled in its movement directions,
**characterized in that**
the counterweight (5) comprises an energy store and/or a motor for converting energy.

2. The work machine (1, 1.1, 1.2) as claimed in claim 1, **characterized in that** the closed-loop control circuit is an electronic closed-loop control circuit and comprises at least inclination sensors and/or load sensors.

3. The work machine (1, 1.1, 1.2) as claimed in one of the preceding claims, **characterized in that** an auxiliary wheel (6) is arranged in and/or on the counterweight (5).

4. The work machine (1, 1.1, 1.2) as claimed in one of the preceding claims, **characterized in that** the wheel elements (4) comprise a brake unit.

5. The work machine (1, 1.1, 1.2) as claimed in one of the preceding claims, **characterized in that** the counterweight (5) is connected to a base element (7) at least via two lever elements (8.1, 8.2).

6. The work machine (1, 1.1, 1.2) as claimed in one of the preceding claims, **characterized by** a hydraulic controller or a parallelogram guide (23) for the counterweight (5), so that the counterweight (5) can be held in an essentially horizontal attitude during the shifting of position.

7. The work machine (1, 1.1, 1.2) as claimed in one of claims 1 to 4, **characterized in that** the counterweight (5) is connected to the base element (7) via a scissor element or is arranged in a displaceable fashion on a linear bearing.

8. The work machine (1, 1.1, 1.2) as claimed in one of the preceding claims, **characterized by** a control element, so that the work machine (1, 1.1, 1.2) has autonomous controllability or remote controllability.

9. The work machine (1, 1.1, 1.2) as claimed in claim 8, **characterized in that** the control element comprises cameras and/or sensor elements.

10. The work machine (1, 1.1, 1.2) as claimed in one of the preceding claims, **characterized in that** the implement is connected to the base element (7) via a working arm (9) and a pivoting lever (10).

11. The work machine (1, 1.1, 1.2) as claimed in claim 10, **characterized in that** the pivoting lever (10) is mounted on the base element (7) behind the primary vehicle axle (3).

12. The work machine (1, 1.1, 1.2) as claimed in one of the preceding claims, **characterized by** a pulse charging method.

13. The work machine (1, 1.1, 1.2) as claimed in one of the preceding claims, **characterized by** a hydraulic accumulator.

14. The work machine (1, 1.1, 1.2) as claimed in one of the preceding claims, **characterized in that** the implement (2, 2.1) is a shovel (31).

## Revendications

1. Machine de travail (1, 1.1, 1.2) comprenant :
- un appareil de travail (2, 2.1, 2.2) ou un réceptacle (16) pour un appareil de travail,
- exactement un essieu de véhicule principal (3),
- des éléments roues (4) disposés des deux côtés de l'essieu de véhicule principal (3),
- des unités d'entraînement associées aux éléments roues (4),
- au moins un dispositif de commande, dans laquelle le dispositif de commande comprend au moins un circuit de régulation et entraîne un auto-équilibrage de la machine de travail (1, 1.1, 1.2) autour de l'essieu de véhicule principal (3), et
- un contrepoids (5), dans laquelle une position du contrepoids (5) par rapport à l'essieu de véhicule principal (3) peut être commandée par l'intermédiaire du dispositif de commande de sorte que, par un décalage de position du contrepoids (5), la machine de travail (1, 1.1, 1.2) peut être équilibrée autour de l'essieu de véhicule principal (3) et ses directions de déplacement peuvent être commandées, **caractérisée en ce que** le contrepoids (5) comprend un accumulateur d'énergie et/ou un moteur permettant la conversion d'énergie.

2. Machine de travail (1, 1.1, 1.2) selon la revendication 1, **caractérisée en ce que** le circuit de régulation est un circuit de régulation électronique et comprend au moins des capteurs d'inclinaison et/ou des capteurs de charge.

3. Machine de travail (1, 1.1, 1.2) selon l'une quelconque des revendications précédentes, **caractérisée en ce qu'**une roue auxiliaire (6) est disposée dans et/ou sur le contrepoids (5).

4. Machine de travail (1, 1.1, 1.2) selon l'une quelconque des revendications précédentes, **caractérisée en ce que** les éléments roues (4) comprennent une unité de freinage.

5. Machine de travail (1, 1.1, 1.2) selon l'une quelconque des revendications précédentes, **caractérisée en ce que** le contrepoids (5) est relié à un élément de base (7) au moins par l'intermédiaire de deux éléments leviers (8.1, 8.2).

6. Machine de travail (1, 1.1, 1.2) selon l'une quelconque des revendications précédentes, **caractérisée par** un dispositif de commande hydraulique ou un guidage en parallélogramme (23) pour le contrepoids (5) de telle sorte que le contrepoids (5) peut être maintenu sensiblement horizontalement pendant le décalage de position.

7. Machine de travail (1, 1.1, 1.2) selon l'une quelconque des revendications 1 à 4, **caractérisée en ce que** le contrepoids (5) est relié à un élément de base (7) par l'intermédiaire d'un élément ciseaux ou est disposé décalable sur un palier linéaire.

8. Machine de travail (1, 1.1, 1.2) selon l'une quelconque des revendications précédentes, **caractérisée par** un élément de commande de telle sorte que la machine de travail (1, 1.1, 1.2) présente la capacité d'être commandée de manière autonome ou à distance.

9. Machine de travail (1, 1.1, 1.2) selon la revendication 8, **caractérisée en ce que** l'élément de commande comprend des caméras et/ou des éléments capteurs.

10. Machine de travail (1, 1.1, 1.2) selon l'une quelconque des revendications précédentes, **caractérisée en ce que** l'appareil de travail est relié à un élément de base (7) par l'intermédiaire d'un bras de travail (9) et d'un levier pivotant (10).

11. Machine de travail (1, 1.1, 1.2) selon la revendication 10, **caractérisée en ce que** le levier pivotant (10) est monté sur un élément de base (7) derrière l'unique essieu de véhicule principal (3).

12. Machine de travail (1, 1.1, 1.2) selon l'une quelconque des revendications précédentes, **caractérisée par** un procédé de charge par impulsions.

13. Machine de travail (1, 1.1, 1.2) selon l'une quelconque des revendications précédentes, **caractérisée par** un accumulateur hydraulique.

14. Machine de travail (1, 1.1, 1.2) selon l'une quelconque des revendications précédentes, **caractérisée en ce que** l'appareil de travail (2, 2.1) est un godet (31).
